# EUROPEAN PATENT APPLICATION

(11) **EP 1 156 406 A1**
(43) Date of publication of application: **21.11.2001**
(21) Application number: 01111134.1
(22) Date of filing: 09.05.2001
(51) Int. Cl.: G06F 1/32

(54) **Power saving method and means in a computer system**

(30) Priority: 15.05.2000 CN 00108554
(71) Applicant: Acer Communications and Multimedia Inc., Kweishan, Taoyuan (TW)
(72) Inventor: Tsou, Hsien-Chun, 157 Shan-Ying Road, Kweishan, Taoyuan (TW)
(74) Representative: Bauer, Robert, Dipl.-Ing.

(57) **Abstract**

A power saving method associated with a computer system (10) includes a computer (12), a monitor (14) and at least one input device (16) . The computer (12) has a controller (20), a first timer (22) and an interrupting module (24) . The monitor (14) has a displaying circuit (32), a second timer (36) and a detector (34). The method includes: using the first timer (22) to detect a time period of inactivity of the input device (16); interrupting at least the HSYNC signal (18) or the VSYNC signal (19) to enter a first power saving mode when the detected time period exceeds a first predetermined length; activating the second timer (36) to count the time that the HSYNC or VSYNC signal (18,19) has been interrupted; and allowing the monitor (14) to enter a second power saving mode if the HSYNC or VSYNC signal (18,19) has not been detected for a second predetermined length of time.

## Description

The present invention relates to power saving in a computer system and, particularly, the monitor thereof.

With the rapid development of the modern technology, computers become unavoidable devices to the daily life of most people. Different generations of new computers or the peripheral devices substitute one another with a rapid speed. Mass production has reduce the prices and at the same time results in a high population and deep dependency by people. In a computer system, it usually comprises the computer, the monitor and various kinds of input and output devices. Among all kinds of computer related devices, the power consumption by the monitor is as much as 50% to 80% of the total electrical energy consumed by the entire computer system. With the limited natural resources and the unavoidable trend to enlarge computer usage, it has been a main issue to use a computer in a economic way. Especially, it is important to reduce the power consumption of the most power-consumed monitor without adding inconvenience to the users at the same time.

In general in the computer system, the computer transmits video signals, HSYNC signal and VSYNC signal to the monitor via a display card, or called a VGA card, for controlling image display on the monitor. When the computer is inactive without user inputs, the HSYNC signal and/or the VSYNC signal are blocked as to avoid being transmitted to the monitor. When no HSYNC signal and/or VSYNC signal are detected in the monitor, some of the devices are powered off. This leads to the power saving mode of the monitor. Even multi power saving modes are developed. For example, the monitor enters a first power saving mode or a second power saving mode under different criteria.

It is necessary to define a clear interrupting criterion or rule when the monitor enters the first power saving mode or the second power saving mode. However, different combinations of interrupting rules are adopted when different VGA cards are designed by different vendors. For example: (1) Enter the first power saving mode when VSYNC signal is interrupted. Enter the second power saving mode when HSYNC signal is interrupted. (2) Enter the first power saving mode when VSYNC signal is interrupted. Enter the second power saving mode when HSYNC signal and VSYNC signal are both interrupted. Therefore, in order to achieve correct power saving mode, some of the controlling has to be adjusted in the monitor, so as to be compatible with the monitor. Otherwise, the monitor will not enter the correct power saving modes in accordance with predetermined criteria or rules.

This in mind, the present invention aims at providing a corresponding power saving method and means allowing the monitor to enter correct power saving modes under different predetermined criteria.

As will be seen more clearly from the detailed description following below, a corresponding computer system uses a first timer to detect the time length that no input signal has been received and uses a second timer to detect the time length that at least one of the HSYNC signal and the VSYNC signal has not been received. Accordingly, any monitor connected with the computer system can enter power saving modes correctly.

In the following, the invention is further illustrated by way of example, taking reference to the accompanying drawings. Thereof
**Fig.1** is a perspective view of the computer system according to the present invention,
**Fig.2** is the functional block diagram of the computer system in **Fig.1,**
**Fig.3** is a perspective view of the OSD set-up menu shown by the OSD unit according to the present invention,
**Fig.4** is a flow chart of interrupting the HSYNC signal and/or the VSYNC signal in the computer side in association with the power saving method, and
**Fig.5A** and **Fig.5B** are flow charts of entering the first and second power saving modes in the monitor side in association with the power saving method.

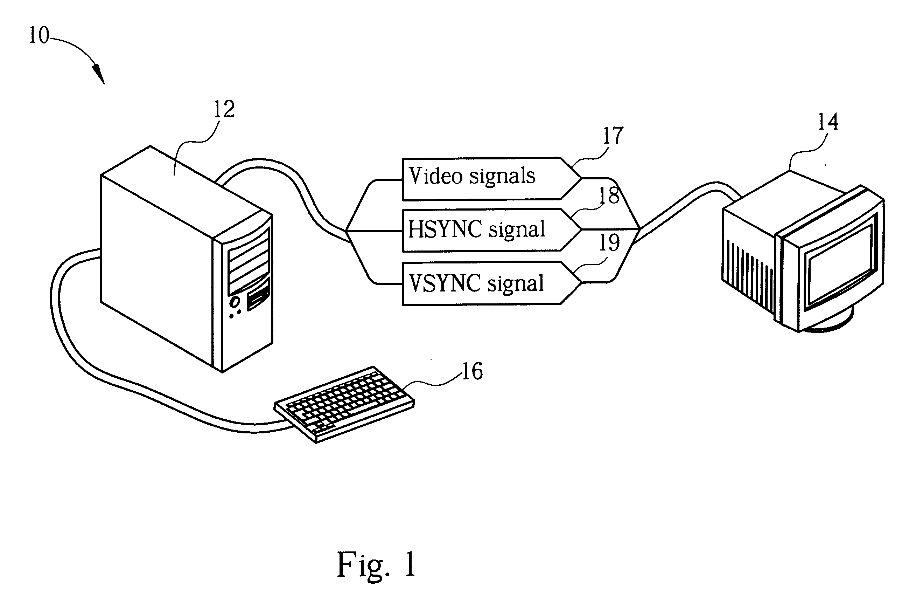

Please refer to **Fig.1. Fig.1** is a perspective view of the computer system 10 according to the present invention. The computer system 10 of the present invention comprises a computer 12, a monitor 14 and at least one input device 16. The computer 12 transmits video signals 17, HSYNC signal 18 and VSYNC signal 19 to the monitor 14 for controlling image display on the monitor 14. The input device 16 can be any available input device nowadays, which includes a keyboard, a mouse, a light pen or a touch pad.

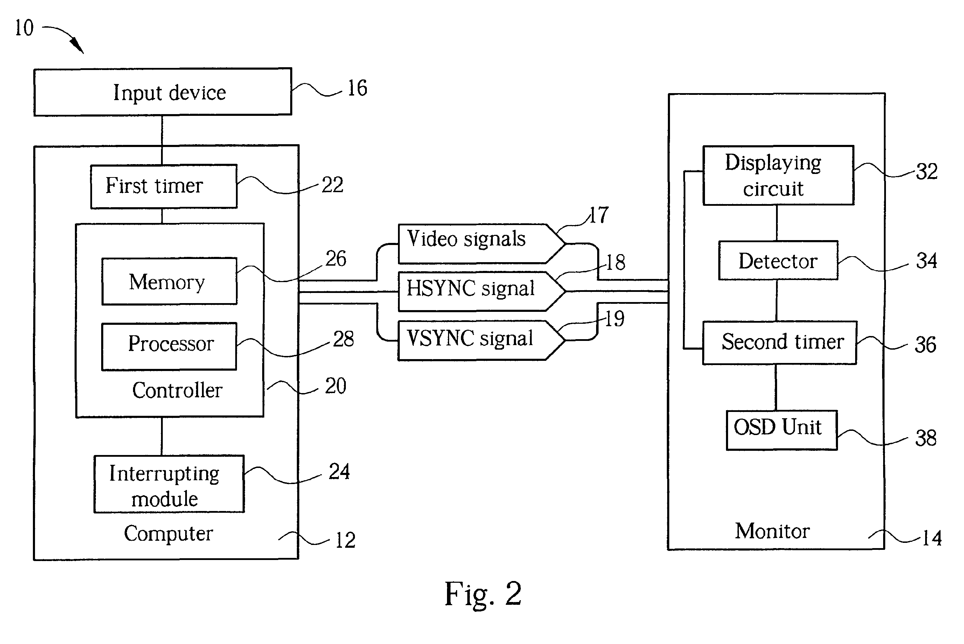

Please refer to **Fig.2. Fig.2** is the functional block diagram of the computer system 10 in **Fig.1.** The computer 12 comprises a controller 20, a first timer 22 and an interrupting module 24. The controller 20 is used for controlling operation of the computer 12, which includes a memory 26 for storing data or programs, and a processor 28 for processing data or executing programs in the memory 26. The first timer 22 is used for detecting and recording time period of inactive state of the input device 16, and generates an interrupt signal to the controller 20 when the detected time period exceeds a predetermined length. The interrupting module 24 is controlled by the controller 20 for interrupting the transmission of the HSYNC signal 18 or the VSYNC signal 19 to the monitor 14. The interrupting module 24 can be a software program executed in the processor 28 or a hardware device in the computer 12. When the controller 20 receives the interrupt signal from the first timer 22, the interrupting module 24 is activated to interrupt the HSYNC signal 18 or the VSYNC signal 19, so as to avoid the HSYNC signal 18 or the VSYNC signal 19 being transmitted to the monitor 14.

The monitor 14 comprises a displaying circuit 32, a detector 34, a second timer 36 and an On Screen Display (OSD) unit 38. The displaying circuit 32 receives the video signals 17, the HSYNC signal 18, the VSYNC signal 19 and other associated control signals from the computer 12 to transform the R, G, B tri-color video signals 17 into corresponding video images and display the images on the screen of the monitor 14. The detector 34 is electrically connected between the displaying circuit 32 and the second timer 36 for detecting the HSYNC signal 18 and the VSYNC signal 19 from the computer 12. The second timer 36 can be an independent oscillating device for counting time period and is electrically connected to the displaying circuit 32 and the detector 34. When the second timer 36 receives output signals from the detector 34, the second timer 36 is activated to start counting. When a predetermined length is counted, a power saving signal is sent out to the displaying circuit 32. The OSD unit 38 can display an OSD set-up menu on the screen of the monitor 14 for a user to proceed set-up configuration of the second timer 36.

The function of the second timer 36 can be achieved by the received HSYNC signal 18 or VSYNC signal 19. For example, assume that the VGA card interrupts only the HSYNC signal 18 during the first power saving mode, however, the VSYNC signal 19 is still transmitted to the monitor 14. The monitor 14 can simply use a counter to count the number of the pulses of the VSYNC signal 19. If the frequency identifier (not shown) of the monitor 14 identifies the frequency of the present VSYNC signal as 75Hz, when the counted pulses amount to 75x60x5=22500, that means the preset time-length of five minutes has arrived.

In the popular IBM-compatible computer, a user can set the time-length of the first timer 22 by choosing the DISPLAY option under the CONTROL PANEL directory in MS Windows OS system. In this way, when the preset time-length of the first timer 22 has arrived, the first timer 22 can set out the first power saving signal to activate the associated modules or devices for further operation. For example, the "first power saving mode waiting time" can be set as ten minutes. When the computer is inactive for ten minutes, the time counting by the first timer 22 will also be ten minutes. The first timer 22 consequently generates the interrupt signal to the interrupting module 24 to interrupt the HSYNC signal 18 and/or the VSYNC signal 19. The HSYNC signal 18 and/or the VSYNC signal 19 are then blocked from the monitor 14.

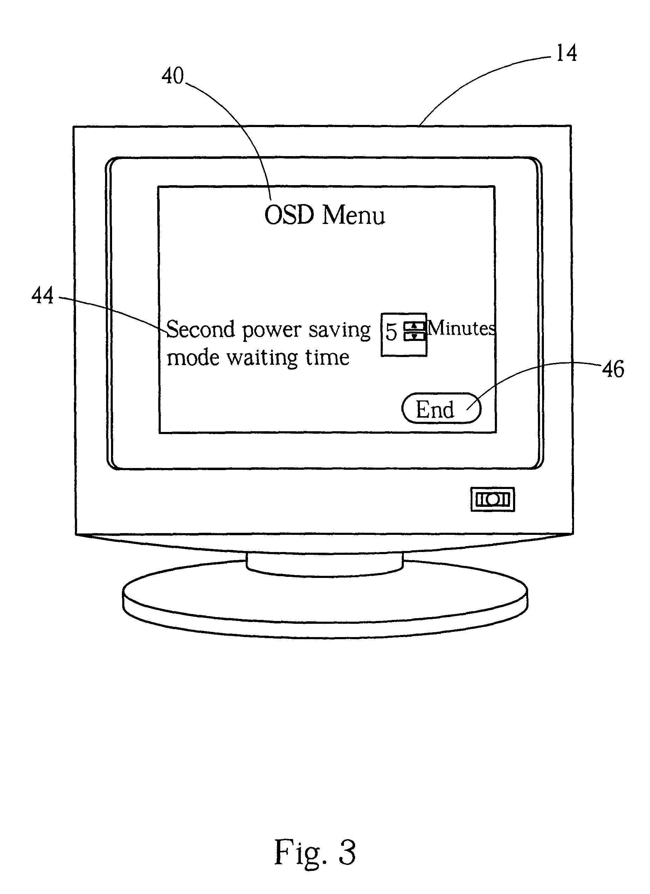

Please refer to **Fig.3. Fig.3** is a perspective view of the OSD set-up menu 40 shown by the OSD unit 38 according to the present invention. The predetermined time-length of the second timer 36 can be set and adjusted in the OSD set-up menu 40 of the monitor 14. When the preset time-length of the second timer 36 has arrived, a power saving signal is sent out to activate associated modules or devices for further operation. For example, the "second power saving mode waiting time" in column 44 of the OSD set-up menu 40 can be set as five minutes. When the HSYNC signal 18 and/or the VSYNC signal 19 are interrupted and blocked for five minutes, the time counting by the second timer 36 will also be five minutes. The second timer 36 consequently generates the second power saving signal to the displaying circuit 32, and force the displaying circuit 32 and the monitor 14 to enter the second power saving mode. There is an "End" button 46 in the OSD set-up menu 40. When the "End" button 46 is touched, the user can quit from the OSD set-up menu 40. Though there is only one column 44 related to the power saving mode in the present computer system 10, it is no limited thereto. Therefore, the column 44 in the OSD set-up menu 40 can be adjusted due to the practical application of the power saving modes in the monitor 14.

In a normal display mode, the computer 12 receives the inputs from the input device 16. The corresponding R, G, B tri-color video signals 17, the HSYNC signal 18 and the VSYNC signal 19 are transmitted to the monitor 14, so that the displaying circuit 32 can display the corresponding video image on the screen of the monitor 14. When new inputs are continuously fed into the input device 16, the first timer 22 is reset to start a new counting. That means, the counting would last only if inactive state of the input device 16 detected by the first timer 22 lasts. If inactive state lasts for ten minutes, the counting of the first timer 22 would also be ten minutes. The interrupt signal is then generated therefrom and sent to the controller 20. When the controller 20 receives the interrupt signal, the interrupting module 24 is activated to interrupt the HSYNC signal 18 or the VSYNC signal 19, or both, so that they can not be transmitted to the monitor 14.

The detector 34 of the monitor 14 is to continuously detect the existence of the HSYNC signal 18 and the VSYNC signal 19 in the monitor 14 side. When the HSYNC signal 18 and the VSYNC signal 19 are not all detected simultaneously, the detector 34 would send out the first power saving signal to the displaying circuit 32, so as to suspend the normal video image display. That is, the monitor 14 enters the first power saving mode. At the same time, the first power saving signal is also sent to the second timer 36, which activates the counting of the second timer 36.

During the first power saving mode of the monitor 14, the detector 34 continuously detects the existence of the HSYNC signal 18 and the VSYNC signal 19 in the monitor 14 side. Any time when the HSYNC signal 18 and the VSYNC signal 19 are both detected simultaneously, that means the input device 16 on the computer 12 side has received new inputs. In the mean time, the detector 34 would send out a restore signal to the displaying circuit 32 to restore normal image display of the monitor 14. The monitor 14 then quits from the first power saving mode and returns to the normal display mode.

It is assumed that the preset time-length of the second timer 36 is five minutes. During the first power saving mode, if not all the HSYNC signal 18 and the VSYNC signal 19 are detected simultaneously and it lasts for five minutes, that means another five minutes have passed and no more inputs are fed into the input device 16 on the computer 12 side. When the second timer 36 counts five minutes, the monitor would then enter the second power saving mode.

During the second power saving mode of the monitor 14, the detector 34 continuously detects the existence of the HSYNC signal 18 and the VSYNC signal 19 in the monitor 14 side. Any time when the HSYNC signal 18 and the VSYNC signal 19 are both detected simultaneously, that means the input device 16 on the computer 12 side has received new inputs. In the mean time, the detector 34 would send out the restore signal to the displaying circuit 32 to restore normal image display of the monitor 14. The monitor 14 then quits from the second power saving mode and returns to the normal display mode.

When the monitor 14 is in the first or second power saving mode, most of the unnecessary or power-consumed elements would be powered off. Only those detecting devices or circuits to maintain the basic operation of the monitor 14 are left power-on. The difference or specification of the first and second power saving modes can be decided and designed according to the practical application by the monitor-manufacturing factory. They can also be defined by the application software to control the monitor 14 on the computer 12 side. A lot of related prior arts can be referenced and no more redundancy is made. In general, more elements and devices would be powered off in the second power saving mode than in the first power saving mode, so as to save more power.

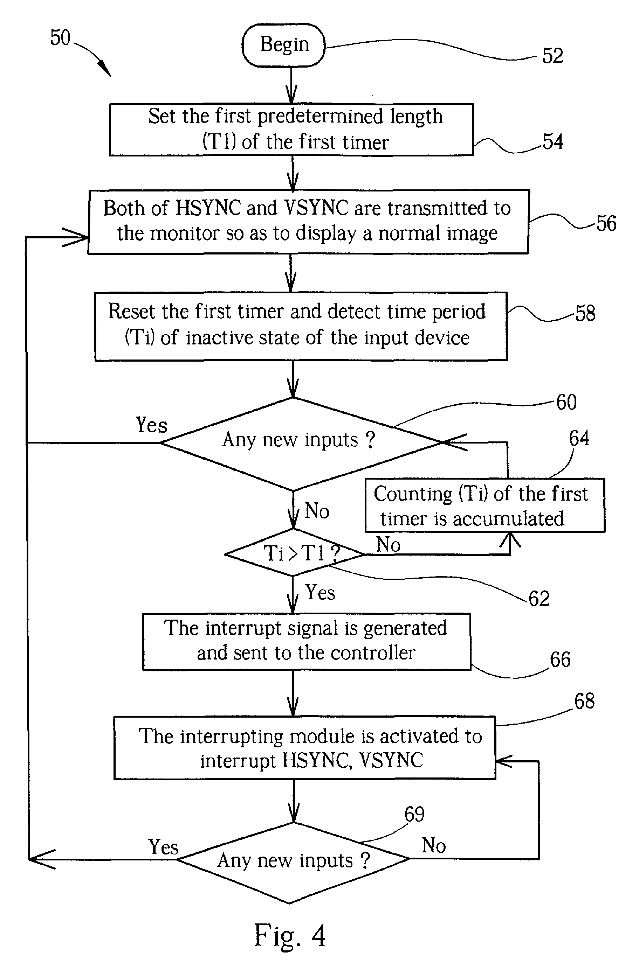

Please refer to **Fig.4. Fig.4** is a flow chart 50 of interrupting the HSYNC signal and/or the VSYNC signal in the computer 12 side in association with the power saving method. It comprises the following steps of:
- Step52 :: Begin ;
- Step54 :: Allow a user to set the first predetermined length (T1) of the first timer 22;
- Step56 :: Both of the HSYNC signal 18 and the VSYNC signal 19 are transmitted from the computer 12 to the monitor 14 so that a normal image is displayed on the monitor 14;
- Step58 :: Reset the first timer 22, and detect time period (Ti) of inactive state of the input device 16 using the first timer 22;
- Step60 :: Is there any new inputs into the input device 16 from the user? If yes, go to step 56; if no, go to step 62;
- Step62 :: If the detected time period exceeds the first predetermined length (Ti>T1) ? If yes, go to step 66; if no, go to step 64;
- Step64 :: Counting (Ti) of the first timer 22 is continuously accumulated ;
- Step66 :: The interrupt signal is generated by the first timer 22 and sent to the controller 20 ;
- Step68 :: When the controller 20 receives the interrupt signal, the interrupting module 24 is activated to interrupt the HSYNC signal 18 and/or the VSYNC signal 19;
- Step69 :: Is there any new inputs into the input device 16 from the user? If yes, go to step 56; if no, go to step 68.

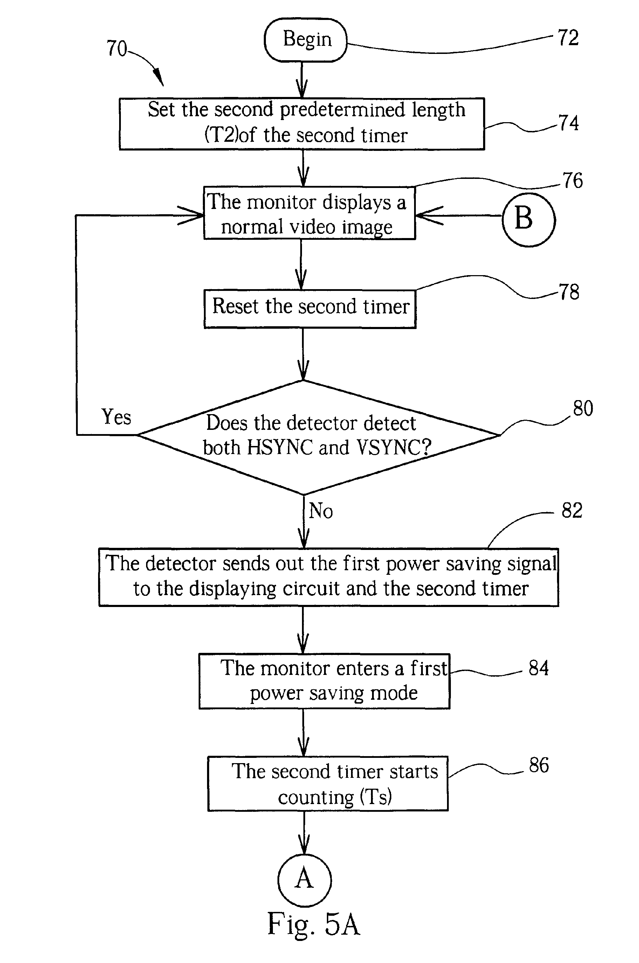

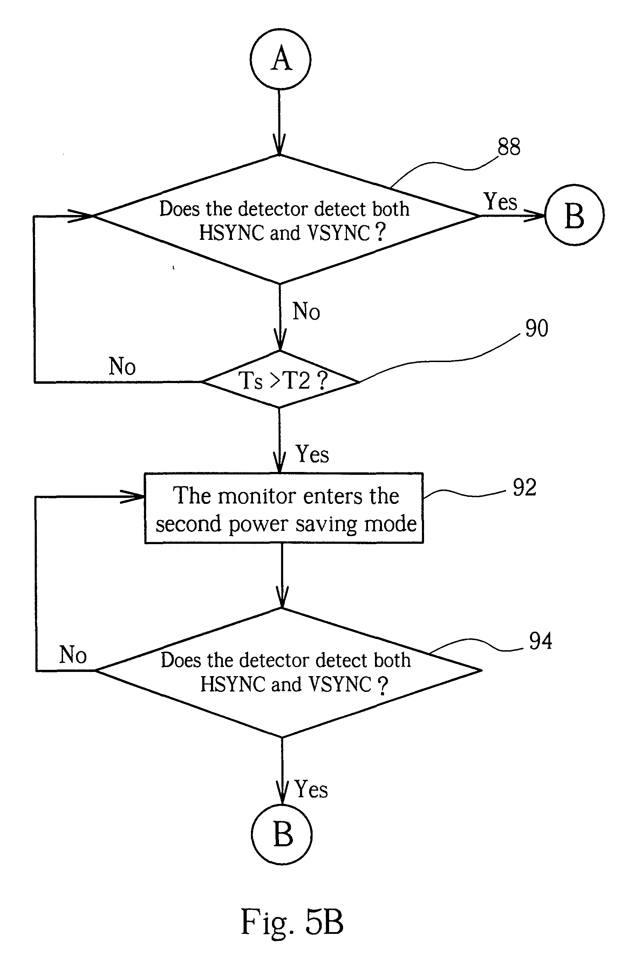

Please refer to **Fig.5A** and **Fig.5B. Fig.5A** and **Fig.5B** are flow charts 70 of entering the first and second power saving modes in the monitor 14 side in association with the power saving method. It comprises the following steps of :
- Step72 :: Begin;
- Step74 :: Set the second predetermined length (T2)of the second timer 36 by means of the OSD menu 40 of the OSD unit 38 ;
- Step76 :: The monitor 14 receives the video signals 17, the HSYNC signal 18 and the VSYNC signal 19, and a normal video image is displayed;
- Step78 :: Reset the second timer 36;
- Step80 :: The detector 34 detects whether the HSYNC signal 18 and the VSYNC signal 19 have been transmitted simultaneously from the computer? If yes, go to step 76; if no, go to step 82;
- Step82 :: The detector 34 sends out the first power saving signal to the displaying circuit 32 and the second timer 36;
- Step84 :: The displaying circuit 32 receives the first power saving signal, and the monitor 14 enters a first power saving mode;
- Step86 :: The second timer 36 receives the first power saving signal and start counting (Ts), so as to detect time period of "non-HSYNC signal 18 and non-VSYNC signal 19" by means of the second timer 36;
- Step88 :: Does the detector 34 detect both the HSYNC signal 18 and the VSYNC signal 19 simultaneously? If yes, go to step 76; if no, go to step 90;
- Step90 :: Does the counting (Ts) of the second timer 36 exceed the second predetermined length (T2) ? If yes, go to step 92; if no, go to step 88;
- Step92 : saving: The second timer 36 sends out the second power signal to the displaying circuit 32 and the monitor 14 enters the second power saving mode;
- Step94 :: Does the detector 34 detect both the HSYNC signal 18 and the VSYNC signal 19 simultaneously ? If yes, go to step 76; if no, go to step 92.

From the aforementioned description, the present computer system 10 utilizes the first timer 22 on the computer 12 side to detect the input device 16 and perform counting. When the first predetermined time-length, which can be adjusted in the provided menu in the MS WINDOWS OS system, arrives, the HSYNC signal 18 and/or the VSYNC signal 19 are interrupted. When the detector 34 on the monitor 14 side does not detect all the HSYNC signal 18 and the VSYNC signal 19 simultaneously, the monitor 14 enters the first power saving mode, and the second timer 36 is activated to start counting. When the second predetermined time-length, which can be adjusted in the OSD menu 40, arrives, the monitor 14 enters the second power saving mode. With the procedure, a user can set and adjust the waiting time of all the power saving modes via the OSD menu 40. The detector 34 on the monitor 14 side and the second timer 36 can also work together to decide the timing when the monitor 14 enters each power saving mode. By the way, compared with the prior arts, no matter how the HSYNC signal and the VSYNC signal are arranged and designed to be interrupted on the VGA cards in the computer 12, the monitor according to the present invention can enter the first and second power saving modes correctly. This would reduce the possibility of errant judgments by the monitor and entering wrong power saving modes accordingly.

## Claims

1. A method for saving power in a computer system (10), the computer system (10) comprising a computer (12), a monitor (14) and at least an input device (16), the computer (12) transmitting video signals (17), HSYNC signal (18) and VSYNC signal (19) to the monitor (14) for controlling image display on the monitor (14),
**characterized in:**
**that** the method comprises:
detecting time period of inactive state of the input device (16) by means of a first timer (22) in the computer (12); when the detected time period exceeds a first predetermined length, the computer (12) interrupting at least the HSYNC signal (18) or the VSYNC signal (19), so as to avoid the HSYNC signal (18) or the VSYNC signal (19) being transmitted to the monitor (14);
when at least one of the HSYNC signal (18) and the VSYNC signal (19) from the computer (12) is not detected by the monitor (14), allowing the monitor (14) to enter a first power saving mode and to activate a second timer (36) to start counting, the counting lasting at least a second predetermined length; and
if at least one of the HSYNC signal (18) and the VSYNC signal (19) not being detected remains till the second predetermined length is counted, allowing the monitor (14) to enter a second power saving mode.

2. The method of claim 1 wherein the monitor (14) further comprises an On Screen Display (OSD) unit (38) and the OSD unit (38) displays a set-up menu (40) on the monitor (14) for set-up configuration.

3. The method of claim 2 wherein the set-up menu (40) allows a user to adjust the second predetermined length, so that the monitor (14) enters the second power saving mode when the second predetermined length is counted.

4. The method of claim 1 wherein when the input device (16) receives inputs again, the HSYNC signal (18) and the VSYNC signal (19) resume being transmitted to the monitor (14) instead of being interrupted.

5. The method of claim 1 wherein the monitor (14) further comprises a displaying circuit (32) for receiving the video signals (17), the HSYNC signal (18) and the VSYNC signal (19) from the computer (12) to control image display on the monitor (14).

6. The method of claim 5 wherein the monitor (14) continues detecting the HSYNC signal (18) and the VSYNC signal (19) during the first power saving mode or the second power saving mode, and when both of the HSYNC signal (18) and the VSYNC signal (19) are detected, a restore signal is transmitted to the displaying circuit (32) to restore normal image display of the monitor (14).

7. A computer system (10) comprising a computer (12), a monitor (14) and at least an input device (16), the computer (12) transmitting video signals (17), HSYNC signal (18) and VSYNC signal (19) to the monitor (14) for controlling image display on the monitor (14), the computer (12) comprising:
a controller (20) for controlling operation of the computer (12);
an interrupting module (24) controlled by the controller (20) for interrupting the HSYNC signal (18) or the VSYNC signal (19), so as to avoid the HSYNC signal (18) or the VSYNC signal (19) being transmitted to the monitor (14);
the monitor (14) comprising:
a displaying circuit (32) for receiving the video signals (17), the HSYNC signal (18) and the VSYNC signal (19) from the computer (12) to control image display on the monitor (14);
**characterized in:**
**that** the computer (12) further comprises:
a first timer (22) for detecting and recording time period of inactive state of the input device (16);
**that** the monitor (14) further comprises:
a second timer (36); and
a detector (34) electrically connected between the displaying circuit (32) and the second timer (36) for detecting the HSYNC signal (18) and the VSYNC signal (19) transmitted from the computer (12), and when at least one of the HSYNC signal (18) and the VSYNC signal (19) is not detected, sending a first power saving signal to the displaying circuit (32) and the second timer (36); and
**that** when the displaying circuit (32) receives the first power saving signal, the monitor (14) enters a first power saving mode, and when the second timer (36) receives the first power saving signal, the second timer (36) is activated to start counting until a second predetermined length is counted, and then sends a second power saving signal to the displaying circuit (32) so that the monitor (14) enters a second power saving mode.

8. The computer system (10) of claim 7 wherein the monitor (14) further comprises an On Screen Display (OSD) unit (38) and the OSD unit (38) displays a set-up menu (40) on the monitor (14) for set-up configuration.

9. The computer system (10) of claim 8 wherein the set-up menu (40) allows a user to adjust the second predetermined length, so that the monitor (14) enters the second power saving mode when the second predetermined length is counted.

10. The computer system (10) of claim 7 wherein when the input device (16) receives inputs again, the HSYNC signal (18) and the VSYNC signal (19) resume being transmitted to the monitor (14) instead of being interrupted by the interrupting module (24).

11. The computer system (10) of claim 7 wherein the detector (34) continues detecting the HSYNC signal (18) and the VSYNC signal (19) during the first power saving mode or the second power saving mode, and when both of the HSYNC signal (18) and the VSYNC signal (19) are detected simultaneously, the detector (34) sends a restore signal to the displaying circuit (32) to restore normal image display of the monitor (14) .

12. A method for controlling a monitor (14) to enter a second power saving mode from a normal display mode, the monitor (14) receiving HSYNC signal (18) and VSYNC signal (19) from a computer (12) for controlling image display, the monitor (14) comprising a detector (34), the detector (34) detecting whether the HSYNC signal (18) and the VSYNC signal (19) are transmitted to the monitor (14), the computer (12) selectively interrupting at least one of the HSYNC signal (18) and the VSYNC signal (19);
**characterized in:**
**that** the monitor (14) further comprises:
a timer (36); and
**that** the method comprises:
(a) when the detector (34) detects at least one of the HSYNC signal (18) and the VSYNC signal (19) as being interrupted, the timer (36) being activated to start counting; and
(b) when at least one of the HSYNC signal (18) and the VSYNC signal (19) not being detected remains and counting of the timer (36) exceeds a predetermined length, the monitor (14) entering a second power saving mode.

13. The method of claim 12 wherein when the detector (34) detects at least one of the HSYNC signal (18) and the VSYNC signal (19) as being interrupted in the step (a), the monitor (14) enters a first power saving mode.

14. A monitor (14) for receiving video signals (17), HSYNC signal (18) and VSYNC signal (19) from a computer (12) for image display, the computer (12) selectively interrupting the HSYNC signal (18) or the VSYNC signal (19), the monitor (14) comprising:
a displaying circuit (32) for receiving the video signals (17), the HSYNC signal (18) and the VSYNC signal (19) from the computer (12) to control image display on the monitor (14);
**characterized in:**
**that** the monitor (14) further comprises:
a timer (36); and
a detector (34) for detecting whether the HSYNC signal (18) and the VSYNC signal (19) are transmitted to the monitor (14), and when at least one of the HSYNC signal (18) and the VSYNC signal (19) is detected as being interrupted, the detector (34) sending a first power saving signal to the timer (36) so as to activate the timer (36) to start counting; and
**that** when at least one of the HSYNC signal (18) and the VSYNC signal (19) not being detected remains and counting of the timer (36) exceeds a predetermined length, the detector (34) sends a second power saving signal to the displaying circuit (32) so that the monitor (14) enters a second power saving mode.

15. The monitor (14) of claim 14 wherein when the detector (34) detects at least one of the HSYNC signal (18) and the VSYNC signal (19) as being interrupted, the detector (34) sends the first power saving signal to the displaying circuit (32) and the timer (36) so as to activate the monitor (14) to enter a first power saving mode.

16. A method for controlling a monitor (14) to enter a second power saving mode from a normal display mode, the monitor (14) receiving HSYNC signal (18) and VSYNC signal (19) from a computer (12) for controlling image display, the monitor (14) comprising a detector (34), the detector (34) detecting whether the HSYNC signal (18) and the VSYNC signal (19) are transmitted to the monitor (14), the computer (12) selectively interrupting at least one of the HSYNC signal (18) and the VSYNC signal (19),
**characterized in:**
**that** the monitor (14) further comprises:
a timer (36); and
**that** the method comprises:
(a) when the detector (34) detects both the HSYNC signal (18) and the VSYNC signal (19) simultaneously, the monitor (14) entering the normal display mode and the timer (36) being reset;
(b) when the detector (34) detects at least one of the HSYNC signal (18) and the VSYNC signal (19) as being interrupted, counting of the timer (36) being accumulated; and
(c) when at least one of the HSYNC signal (18) and the VSYNC signal (19) not being detected remains and counting of the timer (36) exceeds a predetermined length, the monitor (14) entering a second power saving mode.

17. The method of claim 16 wherein when the detector (34) detects at least one of the HSYNC signal (18) and the VSYNC signal (19) as being interrupted in the step (b), the monitor (14) enters a first power saving mode at the same time.
